# EUROPEAN PATENT SPECIFICATION

(11) **EP 2 705 944 B1**
(45) Date of publication and mention of the grant of the patent: **27.07.2016**
(21) Application number: 13183657.9
(22) Date of filing: 10.09.2013
(51) Int. Cl.: B29D 30/30

(54) **Tyre building method and station**
Verfahren und Station zum Aufbauen von Reifen
Méthode et station pour la confection du pneu

(30) Priority: 10.09.2012 IT TO20120778
(43) Date of publication of application: 12.03.2014
(73) Proprietor: Bridgestone Europe NV, 1932 Zaventem (BE)
(72) Inventor: Crociani, Emanuele, 00040 Ariccia (IT)
(74) Representative: Marchetti, Alessio

(56) References cited:
- EP-A1- 1 990 179
- EP-A2- 0 478 259
- WO-A1-2010/001901

## Description

### TECHNICAL FIELD

The present invention relates to a tyre building method and station.

### BACKGROUND ART

A tyre comprises a toroidal carcass, which in turn comprises a partly turned-up body ply, has two annular beads, and supports an annular tread. A tread belt, comprising a number of superimposed tread plies, is interposed between the carcass and the tread. And two rubber tread ply inserts (TPI) are interposed between the body ply and the outer ends of the tread belt to act as a cushion, i.e. as protection, to prevent the outer ends of the tread belt from damaging the body ply underneath.

The body ply is lined with an innerliner, which is impermeable to air and serves to retain the air inside, and maintain the inflation pressure of, the tyre.

In modern tyre building, the tread ply inserts are fitted to the flat body ply; and the body ply, with the tread ply inserts, is then wound about a building drum to form an annular body ply. During this operation, the two opposite ends of the body ply are overlapped and joined by mechanical pressure. Next, the innerliner is applied to the inner surface of the body ply (i.e. the surface on the opposite side to the tread ply inserts) to make the tyre airtight. The other component parts (mainly the beads, sidewalls, tread belt and tread) are fitted to the body ply to complete the green tyre; and the green tyre is then cured in a curing mold to complete the building process and obtain a finished tyre.

Before being cured, the green tyres are "parked' temporarily in holding stores, normally for a period ranging from one day to a week. A relatively frequent occurrence observed in tyre manufacturing plants is the tendency of the innerliner of green tyres awaiting curing to crack due to excessive thinning (`necking') of the innerliner, especially close to the tread ply inserts. In other words, close to the tread ply inserts, the innerliner is subjected to fairly severe mechanical stress, which causes local necking, and may even result in cracking, of the innerliner. Cracking of a green tyre innerliner is irreparable, results in immediate rejection of the green tyre, and therefore clearly poses a serious problem within the tyre manufacturing cycle.

To minimize cracking of innerliners of green tyres awaiting curing, it has been proposed to increase the thickness of the innerliner (even by as much as 50% of its original thickness). Though effective, this solution also has several drawbacks, by increasing both the weight and cost of the tyre (in this connection, it is important to bear in mind that, in tyre manufacturing, the most expensive rubber compound is the one used for the innerliner).

Patent application EP0478259A1 discloses a belt-shaped member sheet cutting and attaching method including steps of paying an innerliner for constituting a tire out of a supply roll by a predetermined length, cutting the paid innerliner at a predetermined angle to the width direction of the member to form a parallelogrammic sheet, transferring the parallelogrammic sheet in the direction of cut edges of the sheet, attaching the sheet around the circumference of a drum, and joining the forward and rearward ends of the sheet with each other.

Patent application EP1990179A1 discloses a method of manufacturing a pneumatic tire, in which a green rubber sheet material is wound around a cylindrical thermoplastic resin film which is placed around a making drum.

Patent application WO2010001901 discloses a method of forming a green tire, in which a laminate (produced by bonding a thin-film inner liner having gas-barrier properties to an green adjacent rubber sheet through an adhesive layer) is wound around the whole periphery of a forming die so that the thin-film inner liner faces inward.

### DESCRIPTION OF THE INVENTION

It is an object of the present invention to provide a tyre building method and station designed to eliminate the above drawbacks, and which, in particular, are cheap and easy to implement.

According to the present invention, there are provided a tyre building method and station as claimed in the accompanying Claims.

### BRIEF DESCRIPTION OF THE DRAWINGS

A non-limiting embodiment of the present invention will be described by way of example with reference to the attached drawings, in which:
Figure 1 shows a schematic cross section, with parts removed for clarity, of a tyre produced in accordance with the present invention;
Figure 2 shows a larger-scale detail of Figure 1;
Figures 3-6 show schematic plan views of part of a flat body ply in the process of building the Figure 1 tyre;
Figures 7-10 show schematic longitudinal sections, corresponding to Figures 3-6, of part of the body ply in the process of building the Figure 1 tyre.
Figure 11 shows a schematic side view of a building drum, around which the body ply is wound in the process of building the Figure 1 tyre;
Figures 12 and 13 show two further schematic longitudinal sections of part of the body ply in the process of building the Figure 1 tyre;
Figure 14 shows a schematic longitudinal section of part of the body ply in the process of building a tyre in accordance with the known state of the art.

### PREFERRED EMBODIMENTS OF THE INVENTION

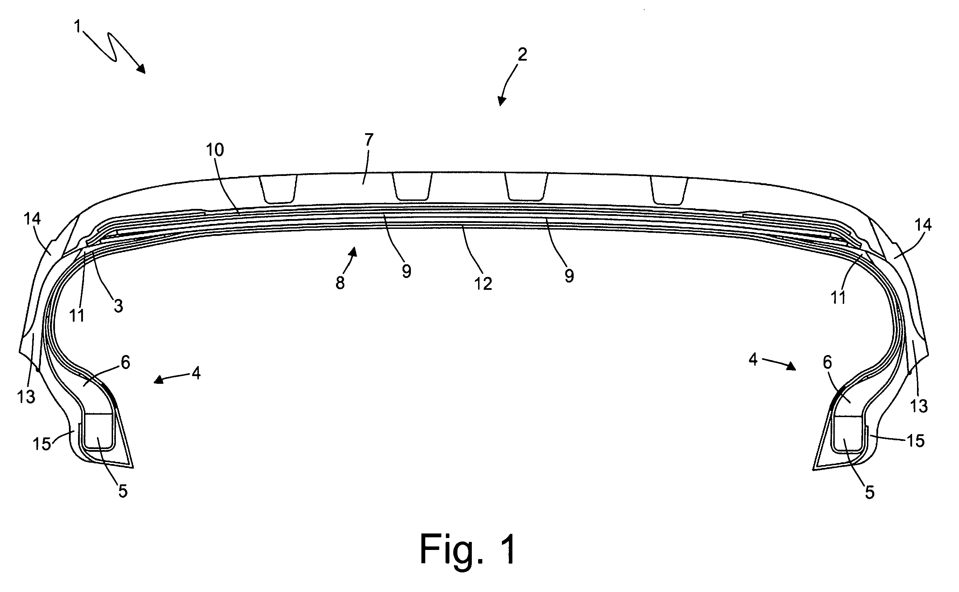

Number 1 in Figure 1 indicates as a whole a tyre comprising a toroidal carcass 2, which in turn comprises a single body ply 3 partly turned up and therefore having two superimposed lateral layers.

Two annular beads 4 are located on opposite sides of carcass 2, are both enclosed by body ply 3, and each comprise a bead core 5 reinforced with a number of turns of metal wire, and a bead filler 6.

Carcass 2 supports an annular tread 7; and a tread belt 8, comprising two tread plies 9, is interposed between carcass 2 and tread 7. Each tread ply 9 comprises a number of cords (not shown), which are embedded in a rubber strip, are arranged side by side with a given spacing, and are inclined at a given angle with respect to the equatorial plane of tyre 1.

A reinforcing layer or so-called 'cap ply' 10 is formed on top of tread belt 8 (i.e. between tread belt 8 and tread 7), and is defined by a continuous strip of green rubber reinforced internally with nylon yarn or similar, and which is wound longitudinally on top of tread belt 8 to protect and retain tread plies 9.

Two tread ply inserts (TPI) 11 are interposed between body ply 3 and the outer ends of tread belt 8 to act as a cushion.

In the embodiment shown in the attached drawings, two opposite lateral ends of body ply 3 are located beneath tread belt 8, close to and inwards of the inner sides (i.e. facing the centre of tyre 1) of tread ply inserts 11.

Body ply 3 is lined with an innerliner 12, which is impermeable to air and serves to retain the air inside, and maintain the inflation pressure of, tyre 1.

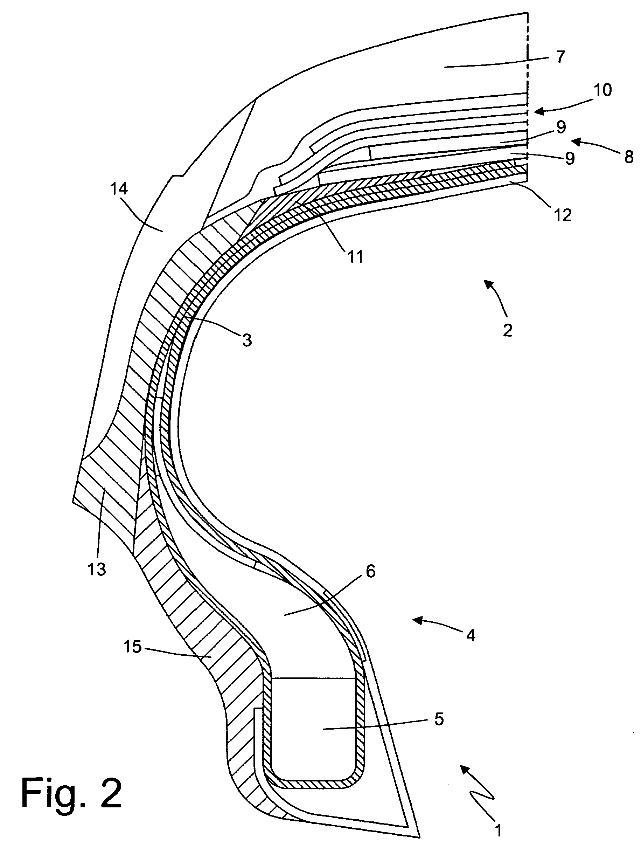

Body ply 3 supports two sidewalls (SW) 13 located on the outside of body ply 3, between tread 7 and beads 4. In the Figure 1 and 2 embodiment, sidewalls 13 are partly covered externally by mini sidewalls (MSW) 14. More specifically, sidewalls 13 are located below tread 7, and mini sidewalls 14 are on a level with tread 7 and therefore located alongside tread 7 at a contact area.

Finally, body ply 3 supports two abrasion gum strips (AGS) 15 located externally, below sidewalls 13, at beads 4.

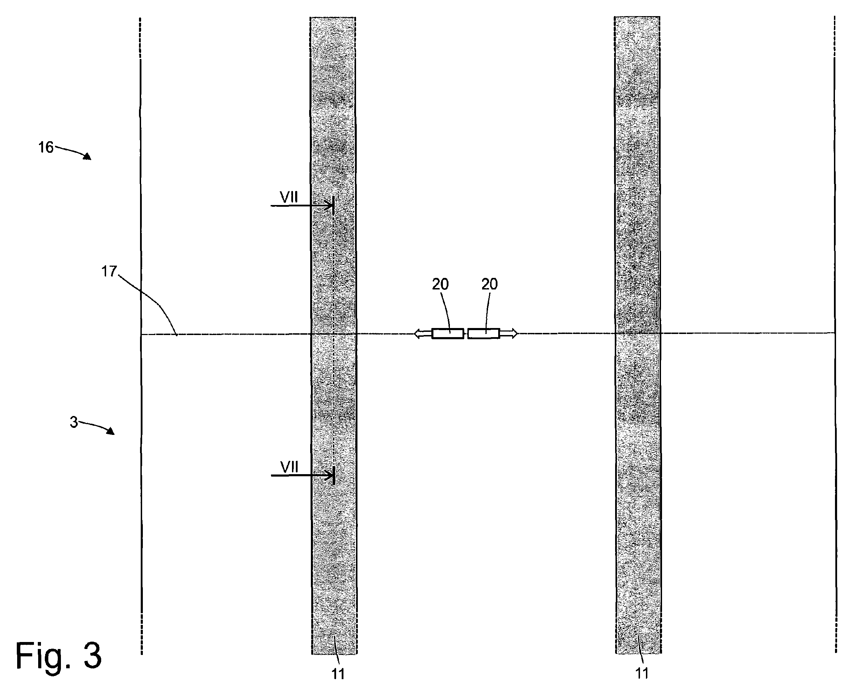

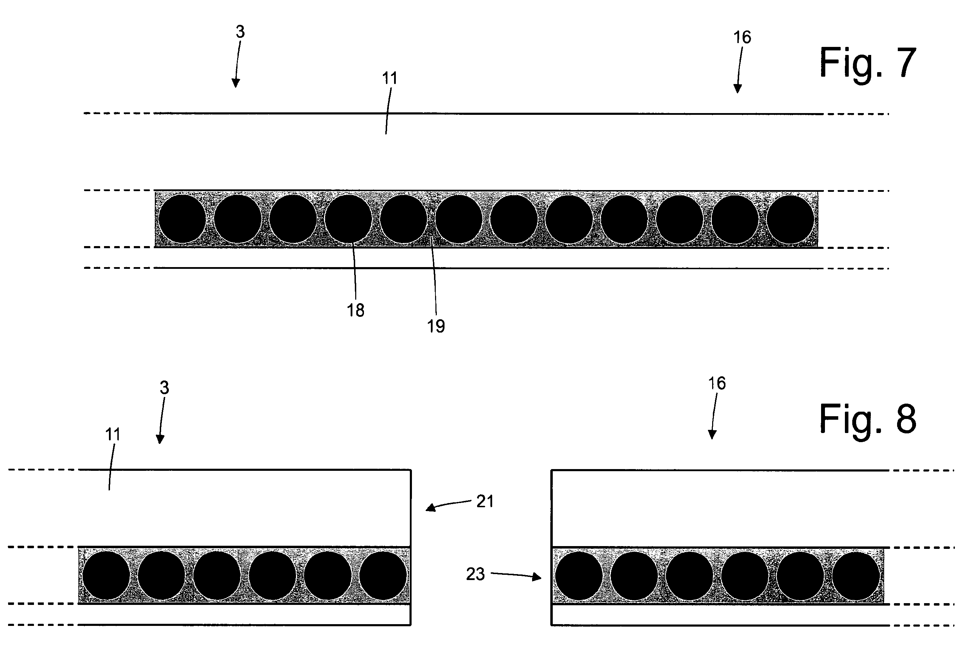

As shown in Figures 3 and 7, a continuous strip 16 is first formed, and from which a transverse cut 17 cuts off body ply 3 complete with tread ply inserts 11. As shown in Figure 7, body ply 3 comprises a number of transverse metal cords 18 embedded in a rubber matrix 19; and transverse cut 17 of continuous strip 16 cuts rubber matrix 19 between, and without cutting, two consecutive cords 18. For this purpose, transverse cut 17 is made using two thin, heated blades 20 (Figure 3), which are inserted radially into the centre of continuous strip 16 and then moved crosswise in opposite directions. Both blades 20 are mounted loosely, so they can make small longitudinal movements to cut around the contour of, and so avoid damaging, cords 18.

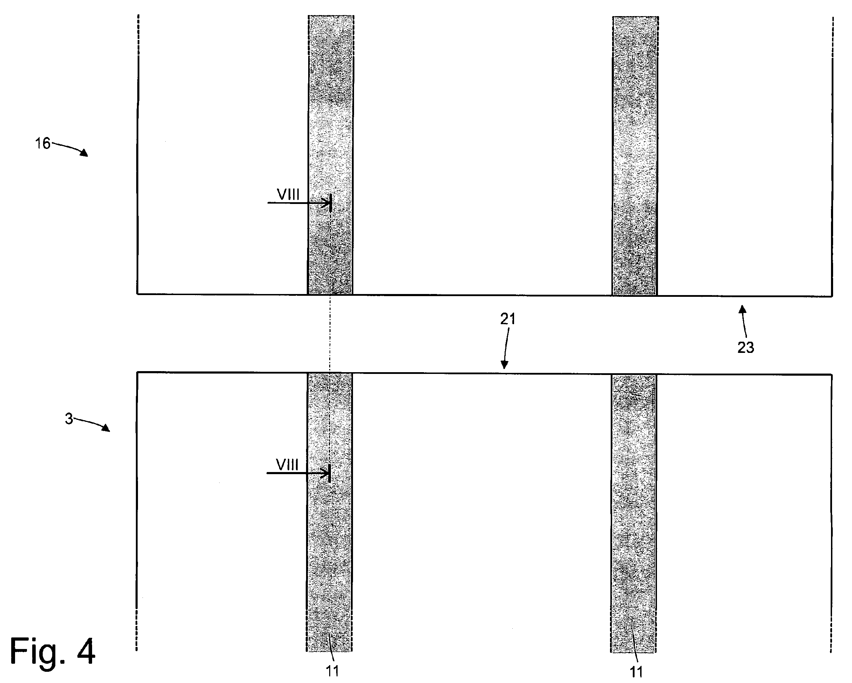

Figures 4 and 8 show body ply 3 after it is cut off continuous strip 16 by transverse cut 17.

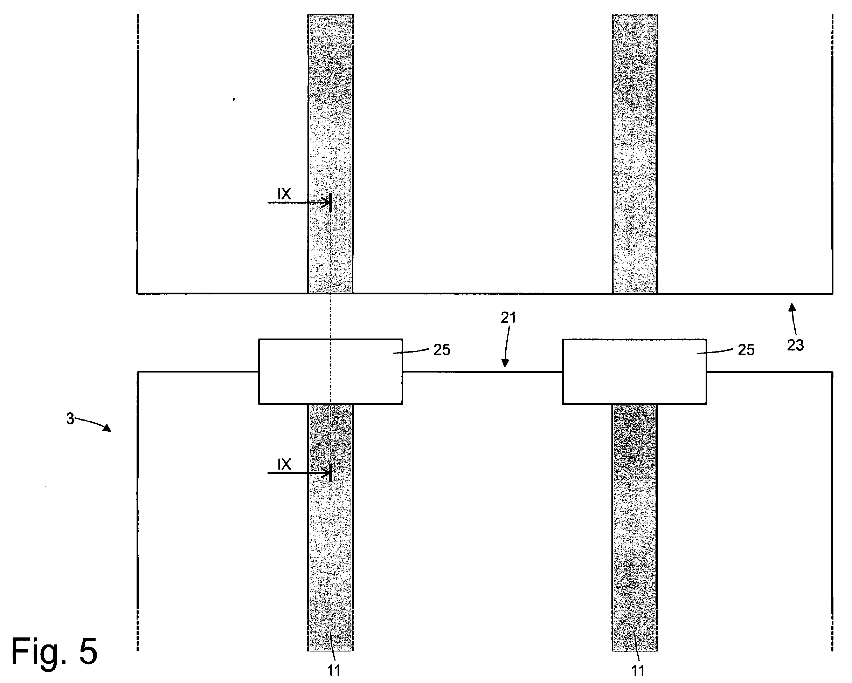

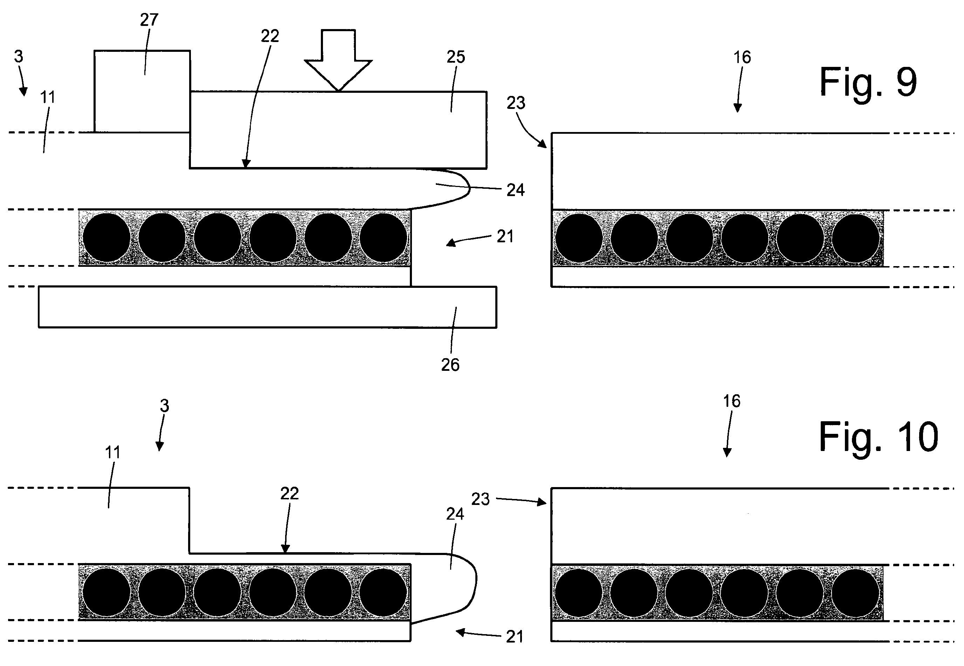

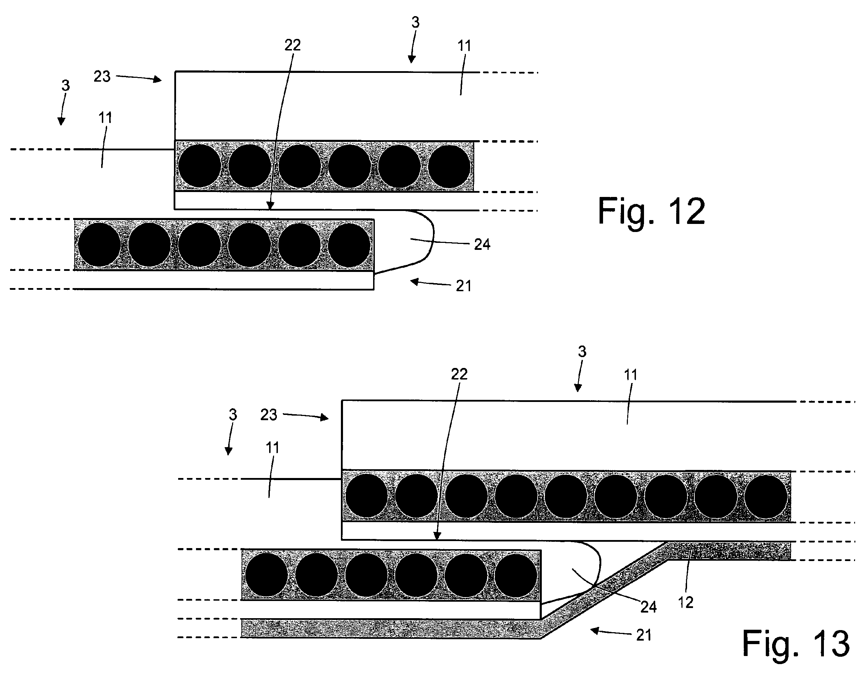

As shown in Figures 5 and 9, after transverse cut 17 is made, i.e. after body ply 3 is cut off continuous strip 16, a recess (i.e. cutback) 22 is made in one end 21 of body ply 3, at each tread ply insert 11. More specifically, each tread ply insert 11 at end 21 of body ply 3 is worked mechanically to form, at tread ply insert 11, a recess 22 for receiving (as shown in Figures 12 and 13) an opposite end 23 of body ply 3, which is superimposed on end 21 as described in detail below,.

As shown in Figures 5 and 9, each recess 22 is formed by permanently deforming tread ply insert 11. Preferably, each tread ply insert 11 is permanently deformed so that part of the rubber from which tread ply insert 11 is made flows longitudinally out from end 21 of body ply 3 to form a projection 24 projecting from end 21.

As shown in Figures 5 and 9, each recess 22 is formed by crushing tread ply insert 11 using a crusher 25, which is pressed onto body ply 3. In other words, each crusher 25 moves perpendicularly to body ply 3 (as shown schematically by the arrow in Figure 9) to crush the relative tread ply insert 11 radially. Each crusher 25 is preferably heated to soften the tread ply insert as it is crushed mechanically. For example, each crusher 25 is heated by electric heating resistors to a temperature of about 120-150°C. In a preferred embodiment, during operation of crushers 25, body ply 3 is supported by a clamping member 26, which supports end 21 of body ply 3, on the opposite side to tread ply inserts 11. During operation of crushers 25, each tread ply insert 11 is also clamped by means of a clamping member 27, which rests on the tread ply insert 11, alongside the relative crusher 25.

In other words, the operating device for forming recesses 22 comprises, for each tread ply insert 11, a crusher 25 movable radially to crush tread ply insert 11; a clamping member 26 which supports body ply 3, on the opposite side to tread ply insert 11; and a clamping member 27 which rests on tread ply insert 11, alongside crusher 25 (i.e. crusher 25 moves radially with respect to clamping member 27).

Each crusher 25 is preferably wider than tread ply insert 11 (as shown clearly in Figure 5), so the action of crusher 25 causes the rubber of tread ply insert 11 to flow longitudinally outwards, to form projection 24, as opposed to transversely on either side of tread ply insert 11.

It is important to note that the two crushers 25 operate together (i.e. are mounted on the same movable frame). In an alternative embodiment not shown, the two crushers 25 (and, likewise, the two clamping members 26 and/or two clamping members 27) may form one unit.

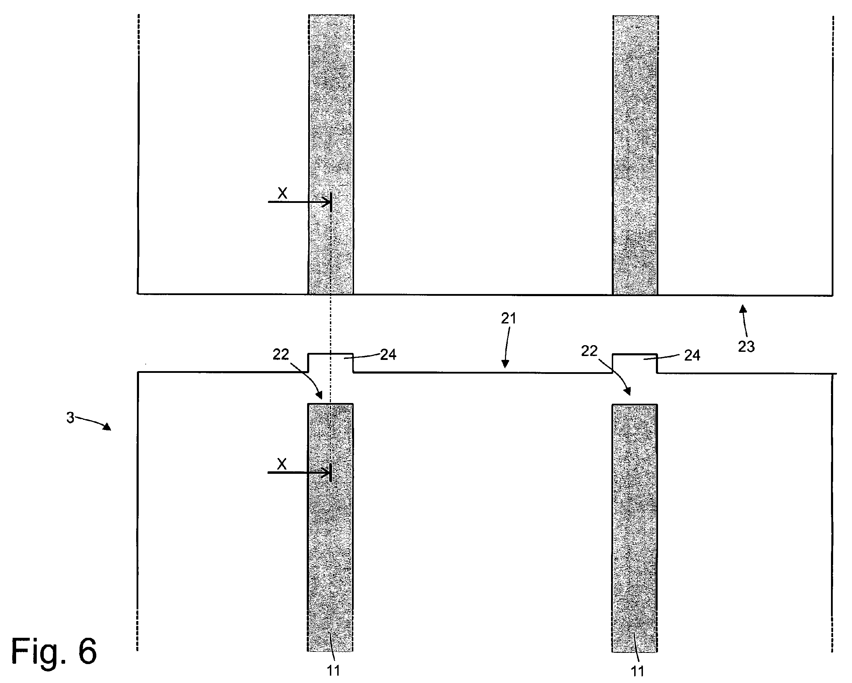

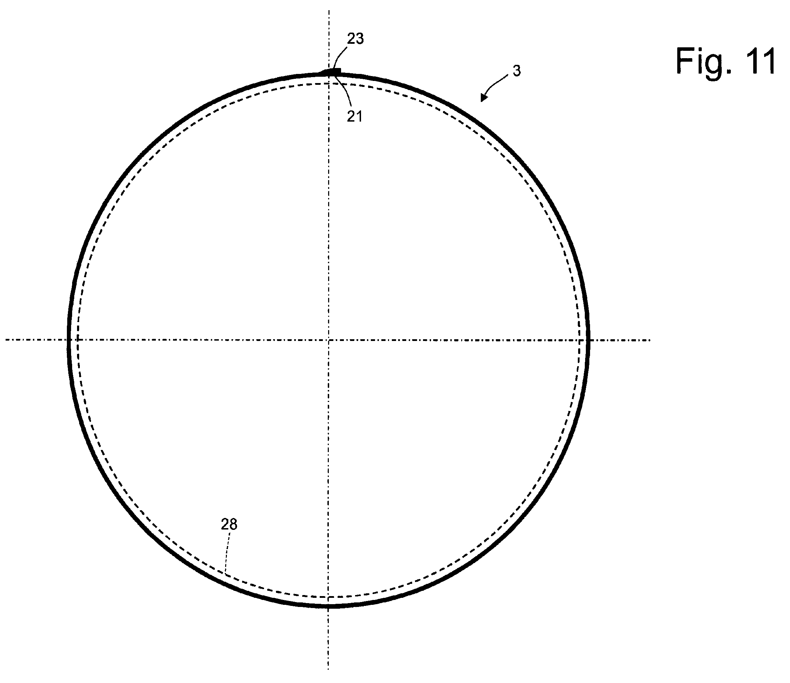

Once recesses 22 are formed (as shown in Figures 6 and 10), body ply 3 is wound about a building drum 28 (Figure 11), and end 23 of body ply 3 is superimposed on end 21 (opposite end 23) of body ply 3 to form an annular body ply 3.

Figure 12 shows an enlarged view of the overlapping ends 23 and 21 of body ply 3. As can be seen, end 23 of body ply 3 rests inside each recess 22, which defines a seat for end 23.

Next, as shown in Figure 13, innerliner 12 is applied to the inside of body ply 3. It is important to note how each projection 24 fills the gap between body ply 3 and innerliner 12, and so provides support for innerliner 12, at the overlap between ends 21 and 23 of body ply 3.

The building method described has numerous advantages.

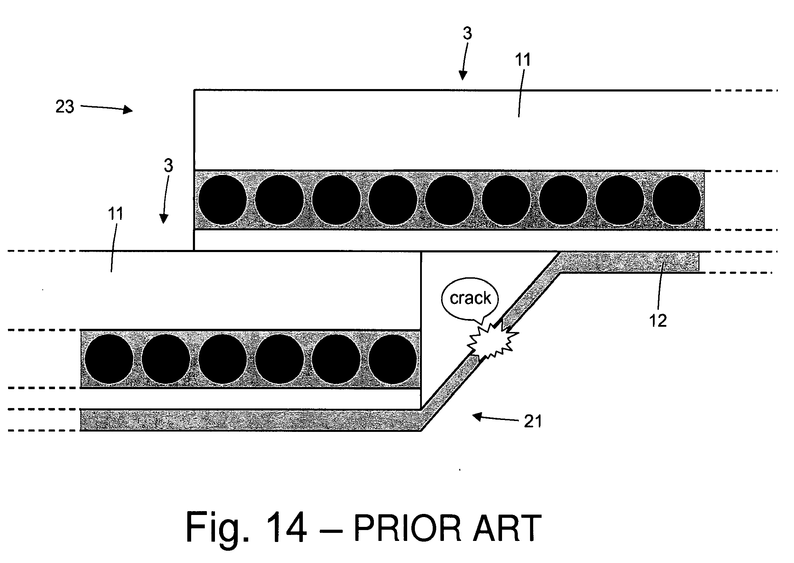

Foremost, it greatly reduces mechanical stress on (and therefore deformation of) innerliner 12 close to tread ply inserts 11, thus making it possible to practically eliminate cracking of even relatively thin green tyre innerliners 12. Comparison of the Figure 13 solution, featuring recesses 22, with the Figure 14 (i.e. state of the art) solution with no recesses 22, shows more clearly the way in which the present invention works: the presence of recesses 22 clearly greatly reduces deformation of innerliner 12 close to tread ply inserts 11.

Simultaneously with recesses 22, the building method described also produces projections 24, which provide support for innerliner 12 at the overlap between ends 21 and 23 of body ply 3.

The building method described is also cheap and easy to implement, by only requiring, with respect to conventional building methods, the addition of an operating device for producing recesses 22; which operating device is extremely straightforward and compact, by featuring few linear moving parts.

The building method described involves no increase in cycle time, on account of recesses 22 being formed fully automatically in a few seconds, after transverse cut 17.

Finally, the building method described in no way damages body ply 3 or, in particular, cords 18 of body ply 3.

## Claims

1. A tyre building method, the method comprising the step of winding a body ply (3), having tread ply inserts (11), about a building drum (28), so that a first end (23) of the body ply (3) overlaps a second end (21), opposite the first end (23), of the body ply (3), to form an annular body ply (3);
the method being **characterized by** comprising the further step, prior to winding the body ply (3) about the building drum (28), of forming a recess (22) on the second end (21) of the body ply (3), on which the first end (23) rests, and at each tread ply insert (11).

2. A method as claimed in Claim 1, wherein each recess (22) is formed by permanently deforming the tread ply insert (11).

3. A method as claimed in Claim 2, wherein each tread ply insert (11) is permanently deformed so that part of the rubber of which the tread ply insert (11) is made flows longitudinally out of the second end (21) of the body ply (3) to form a projection (24) on the second end (21).

4. A method as claimed in Claim 1, 2 or 3, wherein each recess (22) is formed by crushing the tread ply insert (11) using a crusher (25) pressed onto the body ply (3).

5. A method as claimed in Claim 4, and comprising the step of supporting the body ply (3), during operation of the crusher (25), by means of a first clamping member (26), which supports the second end (21) of the body ply (3), on the opposite side to the tread ply insert (11).

6. A method as claimed in Claim 4 or 5, and comprising the step of clamping the tread ply insert (11), during operation of the crusher (25), by means of a second clamping member (27), which rests on the tread ply insert (11), alongside the crusher (25).

7. A method as claimed in Claim 4, 5 or 6, and comprising the further step of heating the crusher (25).

8. A method as claimed in one of Claims 4 to 7, wherein the crusher (25) is wider than the tread ply insert (11).

9. A method as claimed in one of Claims 1 to 8, and comprising the further steps of:
transversely cutting a continuous strip (16) to cut the body ply (3) with the tread ply inserts (11) off the continuous strip (16); and
forming the recesses on the second end (21) of the body ply (3) after cutting the body ply off the continuous strip (16).

10. A method as claimed in Claim 9, wherein:
the body ply (3) comprises a number of transverse metal cords (18) embedded in a rubber matrix (19); and
transversely cutting (17) the continuous strip (16) comprises cutting the rubber matrix (19) between, and without cutting, two consecutive cords (18).

11. A method as claimed in one of Claims 1 to 10, wherein the first end (23) of the body ply (3) rests inside each recess (22), which forms a seat for the first end (23).

12. A method as claimed in one of Claims 1 to 11, and comprising the further step of applying an innerliner (12) to the inside of the body ply (3).

13. A tyre building station, the station comprising a building drum (28) about which a body ply (3), having tread ply inserts (11), is wound so that a first end (23) of the body ply (3) overlaps a second end (21), opposite the first end (23), of the body ply (3), to form an annular body ply (3);
the station being **characterized by** comprising an operating device which, prior to winding the body ply (3) about the building drum (28), forms a recess (22) on the second end (21) of the body ply (3), on which the first end (23) rests, and at each tread ply insert (11).

## Patentansprüche

1. Verfahren zum Reifenbau, wobei das Verfahren den Schritt des Wickelns einer Karkassenlage (3) mit Laufflächenlagen-Einlegern (11) um eine Bautrommel (28) umfasst, sodass das erste Ende (23) der Karkassenlage (3) ein zweites Ende (21) der Karkassenlage (3), gegenüberliegend vom ersten Ende (23), überlappt, um eine ringförmige Karkassenlage (3) zu bilden;
wobei das Verfahren **dadurch gekennzeichnet ist, dass** es vor dem Wickeln der Karkassenlage (3) um die Bautrommel (28) den weiteren Schritt des Bildens einer Einbuchtung (22) am zweiten Ende (21) der Karkassenlage (3) umfasst, auf der das erste Ende (23) aufliegt, und zwar bei jedem Laufflächenlagen-Einleger (11).

2. Verfahren nach Anspruch 1, wobei jede Einbuchtung (22) durch dauerhaftes Verformen des Laufflächenlagen-Einlegers (11) gebildet wird.

3. Verfahren nach Anspruch 2, wobei jeder Laufflächenlagen-Einleger (11) dauerhaft verformt wird, sodass ein Teil des Gummis, aus dem der Laufflächenlagen-Einleger (11) besteht, sich in Längsrichtung über das zweite Ende (21) der Karkassenlage (3) hinaus bewegt, um am zweiten Ende (21) einen Vorsprung (24) zu bilden.

4. Verfahren nach Anspruch 1, 2 oder 3, wobei jede Einbuchtung (22) durch Zusammenpressen des Laufflächenlagen-Einlegers (11) unter Verwendung eines Quetschelements (25) gebildet wird, das auf die Karkassenlage (3) gedrückt wird.

5. Verfahren nach Anspruch 4 und umfassend den Schritt des Abstützens der Karkassenlage (3), während des Betätigens des Quetschelements (25), mittels eines ersten Klemmelements (26), welches das zweite Ende (21) der Karkassenlage (3) auf der gegenüberliegenden Seite vom Laufflächenlagen-Einleger (11) stützt.

6. Verfahren nach Anspruch 4 oder 5 und umfassend den Schritt des Festklemmens des Laufflächenlagen-Einlegers (11), während des Betätigens des Quetschelements (25), mittels eines zweiten Klemmelements (27), welches neben dem Quetschelement (25) auf dem Laufflächenlagen-Einleger (11) aufliegt.

7. Verfahren nach Anspruch 4, 5 oder 6 und umfassend den weiteren Schritt des Erwärmens des Quetschelements (25).

8. Verfahren nach einem der Ansprüche 4 bis 7, wobei das Quetschelement (25) breiter als der Laufflächenlagen-Einleger (11) ist.

9. Verfahren nach einem der Ansprüche 1 bis 8 und umfassend die folgenden weiteren Schritte:
Querschneiden eines kontinuierlichen Streifens (16) zum Abschneiden der Karkassenlage (3) mit den Laufflächenlagen-Einlegern (11) vom kontinuierlichen Streifen (16); und
Bilden der Einbuchtungen am zweiten Ende (21) der Karkassenlage (3) nach Abschneiden der Karkassenlage vom kontinuierlichen Streifen (16).

10. Verfahren nach Anspruch 9, wobei:
die Karkassenlage (3) eine Anzahl von querliegenden Metallcords (18) umfasst, die in eine Gummimatrix (19) eingebettet sind; und
das Querschneiden (17) des kontinuierlichen Streifens (16) das Schneiden der Gummimatrix (19) zwischen zwei aufeinanderfolgenden Cords (18), und ohne diese zu schneiden, umfasst.

11. Verfahren nach einem der Ansprüche 1 bis 10, wobei das erste Ende (23) der Karkassenlage (3) innerhalb von jeder Einbuchtung (22) liegt, welche eine Aufnahme für das erste Ende (23) bildet.

12. Verfahren nach einem der Ansprüche 1 bis 11 und umfassend den weiteren Schritt des Aufbringens einer Innenschicht (12) auf die Innenseite der Karkassenlage (3).

13. Reifenbaustation, wobei die Station eine Bautrommel (28) umfasst, um die eine Karkassenlage (3) mit Laufflächenlagen-Einlegern (11) gewickelt wird, damit das erste Ende (23) der Karkassenlage (3) ein zweites Ende (21) der Karkassenlage (3), gegenüberliegend vom ersten Ende (23), überlappt und eine ringförmige Karkassenlage (3) bildet;
wobei die Station **dadurch gekennzeichnet ist, dass** sie eine Bedienvorrichtung umfasst, welche vor dem Wickeln der Karkassenlage (3) um die Bautrommel (28) eine Einbuchtung (22) am zweiten Ende (21) der Karkassenlage (3) bildet, auf der das erste Ende (23) aufliegt, und zwar bei jedem Laufflächenlagen-Einleger (11).

## Revendications

1. Procédé de construction de pneumatiques, le procédé comprenant l'étape consistant à enrouler une nappe de carcasse (3), comportant des inserts (11) de nappe de bande de roulement, autour d'un tambour de construction (28), de sorte qu'une première extrémité (23) de la nappe de carcasse (3) chevauche une seconde extrémité (21), opposée à la première extrémité (23), de la nappe de carcasse (3), pour former une nappe de carcasse annulaire (3) ;
le procédé étant **caractérisé en ce qu**'il comprend l'étape supplémentaire, avant enroulement de la nappe de carcasse (3) autour du tambour de construction (28), consistant à former un logement (22) sur la seconde extrémité (21) de la nappe de carcasse (3), sur lequel la première extrémité (23) repose et au niveau de chaque insert (11) de nappe de bande de roulement.

2. Procédé selon la revendication 1, dans lequel chaque logement (22) est formé en déformant de manière permanente l'insert (11) de nappe de bande de roulement.

3. Procédé selon la revendication 2, dans lequel chaque insert (11) de nappe de bande de roulement est déformé de manière permanente de sorte qu'une partie du caoutchouc dont est constitué l'insert (11) de nappe de bande de roulement s'écoule longitudinalement à l'extérieur de la seconde extrémité (21) de la nappe de carcasse (3) pour former une saillie (24) sur la seconde extrémité (21).

4. Procédé selon la revendication 1, 2 ou 3, dans lequel chaque logement (22) est formé par écrasement de l'insert (11) de nappe de bande de roulement à l'aide d'un broyeur (25) pressé sur la nappe de carcasse (3).

5. Procédé selon la revendication 4 et comprenant l'étape consistant à soutenir la nappe de carcasse (3), pendant le fonctionnement du broyeur (25), au moyen d'un premier élément de serrage (26), qui soutient la seconde extrémité (21) de la nappe de carcasse (3), sur le côté opposé à l'insert (11) de nappe de bande de roulement.

6. Procédé selon la revendication 4 ou 5 et comprenant l'étape consistant à serrer l'insert (11) de nappe de bande de roulement, pendant le fonctionnement du broyeur (25), au moyen d'un second élément de serrage (27), qui repose sur l'insert (11) de nappe de bande de roulement, à côté du broyeur (25).

7. Procédé selon la revendication 4, 5 ou 6 et comprenant l'étape supplémentaire consistant à chauffer le broyeur (25).

8. Procédé selon l'une quelconque des revendications 4 à 7, dans lequel le broyeur (25) est plus large que l'insert (11) de nappe de bande de roulement.

9. Procédé selon l'une quelconque des revendications 1 à 8 et comprenant les étapes supplémentaires consistant à :
couper transversalement une bande continue (16) pour couper de la bande continue (16) la nappe de carcasse (3) avec les inserts (11) de nappe de bande de roulement ; et
former les logements sur la seconde extrémité (21) de la nappe de carcasse (3) après avoir coupé la nappe de carcasse de la bande continue (16).

10. Procédé selon la revendication 9, dans lequel :
la nappe de carcasse (3) comprend un certain nombre de fils métalliques transversaux (18) intégrés dans une matrice de caoutchouc (19) ; et
la découpe transversale (17) de la bande continue (16) comprend la découpe de la matrice de caoutchouc (19) entre deux fils consécutifs (18) et sans les couper.

11. Procédé selon l'une quelconque des revendications 1 à 10, dans lequel la première extrémité (23) de la nappe de carcasse (3) repose à l'intérieur de chaque logement (22), ce qui forme un logement pour la première extrémité (23).

12. Procédé selon l'une quelconque des revendications 1 à 11, et comprenant l'étape supplémentaire consistant à appliquer un revêtement intérieur (12) à l'intérieur de la nappe de carcasse (3).

13. Poste de construction de pneumatiques, le poste comprenant un tambour de construction (28) autour duquel est enroulée une nappe de carcasse (3), comportant des inserts (11) de nappe de bande de roulement, de sorte qu'une première extrémité (23) de la nappe de carcasse (3) chevauche une seconde extrémité (21), opposée à la première extrémité (23), de la nappe de carcasse (3), pour former une nappe de carcasse annulaire (3) ;
le poste étant **caractérisé en ce qu**'il comprend un dispositif opérationnel qui, avant enroulement de la nappe de carcasse (3) autour du tambour de construction (28), forme un logement (22) sur la seconde extrémité (21) de la nappe de carcasse (3) sur lequel repose la première extrémité (23) et au niveau de chaque insert (11) de nappe de bande de roulement.
